# EUROPÄISCHE PATENTANMELDUNG

(11) **EP 0 992 409 A1**
(43) Veröffentlichungstag der Anmeldung: **12.04.2000**
(21) Anmeldenummer: 99105595.5
(22) Anmeldetag: 18.03.1999
(51) Int. Cl.: B60R 25/10, G08B 25/01

(54) **Montagebausatz sowie dessen Anordnung und Verwendung in einem Fahrzeug**

(30) Priorität: 08.10.1998 CH 203898
(71) Anmelder: Peiker, Andreas, 61381 Friedrichsdorf/Ts (DE)
(72) Erfinder: Peiker, Andreas, 61381 Friedrichsdorf/Ts (DE)
(74) Vertreter: Roshardt, Werner Alfred, Dipl.-Phys.

(57) **Zusammenfassung**

Ein Bausatz für eine Montage in einem Fahrzeug zur funktechnischen Übermittlung wenigstens eines bereits abgespeicherten Informationssatzes hat eine erste eingehäusige, eine erste Antenne **(7)** zusammen mit einer den geographischen Ort erkennenden Auswerteeinheit aufweisende Baueinheit **(1)**. Diese Baueinheit **(1)** hat zusätzlich eine Ortsspeichereinheit für diesen Ortswert. Ferner hat der Bausatz eine zweite wenigstens eine Auslöseeinheit zum Auslösen des Informationssatzes aufweisende Baueinheit **(3; 50)**. Aufgabe der Erfindung ist es, einen einfachen und kostengünstigen Bausatz zu schaffen, der bisherige Vorrichtungen ersetzt, welche einen aufwendigen Soft- und Hardwareaufwand benötigten. Der erfindungsgemäße Bausatz läßt sich zudem mit einem minimalen Montageaufwand in ein Fahrzeug ein- bzw. anbauen.

## Beschreibung

Die Erfindung betrifft einen Bausatz gemäß Patentanspruch 1, dessen Anordung und Verwendung in einem Fahrzeug gemäß der Oberbegriffe der Patentansprüche 8 bzw. 10.

### Stand der Technik

Im Bereich der Verkehrstelematik wurden in der DE-U 296 00 600, der EP-A 0 679 041 und der WO 97/25223 Vorschläge unterbreitet, wie im Zusammenhang mit einem GPS (Global Positioning System) in einem Fahrzeug Pannen-, Unfall-, Navigationshilfe usw. angefordert werden konnten.

Gemeinsam ist dem hier aufgeführten Stand der Technik die zwingende Verwendung eines Mobiltelefons für die Datenübertragung zu einer Bearbeitungsstelle bzw. Verteilerstelle. Es wird ferner eine umfangreiche Steuerelektronik benötigt, welche den Benützer authentifiziert, die Datenübertragung verschlüsselt, Dienstberechtigungen vergibt bzw. eine Neukonfiguration des Übermittlungssystems vornimmt. Hieraus ergibt sich ein enormer Soft- und Hardwareaufwand im betreffenden Endgerät.

### Aufgabe der Erfindung

Aufgabe der Erfindung ist es, eine einfache und kostengünstige Vorrichtung zu schaffen, welche die bisherige Vorrichtung ersetzt, welche einen aufwendigen Soft- und Hardwareaufwand benötigten, wobei die erfindungsgemäße Vorrichtung sich zudem mit einem minimalen Montageaufwand in ein Fahrzeug einbauen lassen soll.

### Lösung der Aufgabe

Der minimale Montageaufwand wird erfindungsgemäß dadurch erreicht, daß ein Aufbau mit einem einfachen Endgerät geschaffen wird, welches mit optimierten Softwareabläufen kombiniert eine zuverlässige Hilfeleistung, z.B. einen Notruf ermöglicht. Hierzu ist ein erfindungsgemäßer Bausatz geschaffen worden, der für die Zusatzfunktionen zur Verkehrstelematik lediglich eine erste und eine zweite Baueinheit aufweist. Nur hierdurch ist ein minimaler Montageaufwand erreichbar. Beide Baueinheiten können eingehäusig ausgebildet sein und werden im Fahrzeug örtlich voneinander getrennt angeordnet. Die signalmäßige Verbindung kann dann lediglich durch ein Kabel erfolgen oder wie in einer besonderen Ausgestaltung schnurlos über eine elektromagnetische Strahlung, welche im hochfrequenten sowie auch im infraroten Bereich liegen kann. Die erste Baueinheit enthält eine Antenne zusammen mit einer den geographischen Ort erkennenden Auswerteeinheit, wie beispieslweise einer GPS-Einheit. Die zweite Baueinheit kann als Auslöseeinheit eine Tasten aufweisende Bedieneinheit mit einem Informationsspeicher haben. Anstelle einer GPS-Einheit kann auch eine GLONASS-Einheit (**Glo**bal **Na**vigation **S**atellite **S**ystem) verwendet werden.

Die erste Baueinheit wird man in vorteilhafter Weise mit einem Magnetfuß ausrüsten, damit sie problemlos und einfach auf einem Fahrzeugdach anbringbar und wieder wegnehmbar ist.

In bevorzugter Weise ist die zweite Baueinheit als Tastenmatte ausgebildet, in welche die entsprechenden elektronischen Bauelemente bzw. Anzeigeelemente integriert sind. Diese Matte kann dann in der Fahrzeuginnenseite dort angeklebt werden, wo sie gut sichtbar bzw. bedienbar ist.

Die erste Baueinheit als die teurere ist auswechselbar ausgebildet, während die hierzu bedeutend billigere zweite Baueinheit im Fahrzeuginnenraum eingeklebt wird und in der Regel dort verbleibt. Man wird sie jedoch lösbar ausbilden, damit der Fahrer bzw. sein Beifahrer einen optimalen Ort wählen können.

Weitere Vorteile der Erfindung sowie Ausführungsvarianten ergeben sich aus dem untenstehenden Text.

### Ausführungebeispiele der Erfindung

Im folgenden werden Beispiele des erfindungsgemässen Bausatzes anhand der Zeichnungen näher erläutert. Es zeigen:
- Fig. 1: ein elektrisches Blockschaltbild eines beispielsweise mit einer Freisprecheinrichtung in einem Fahrzeug verbundenen erfindungsgemässen Bausatzes,
- Fig. 2: eine beispielsweise Ausführung einer elektrischen Verbindung zu der Darstellung in **Figur 1** und
- Fig. 3: eine Variante einer zweiten Baueinheit des in **Figur 1** dargestellten Bausatzes.

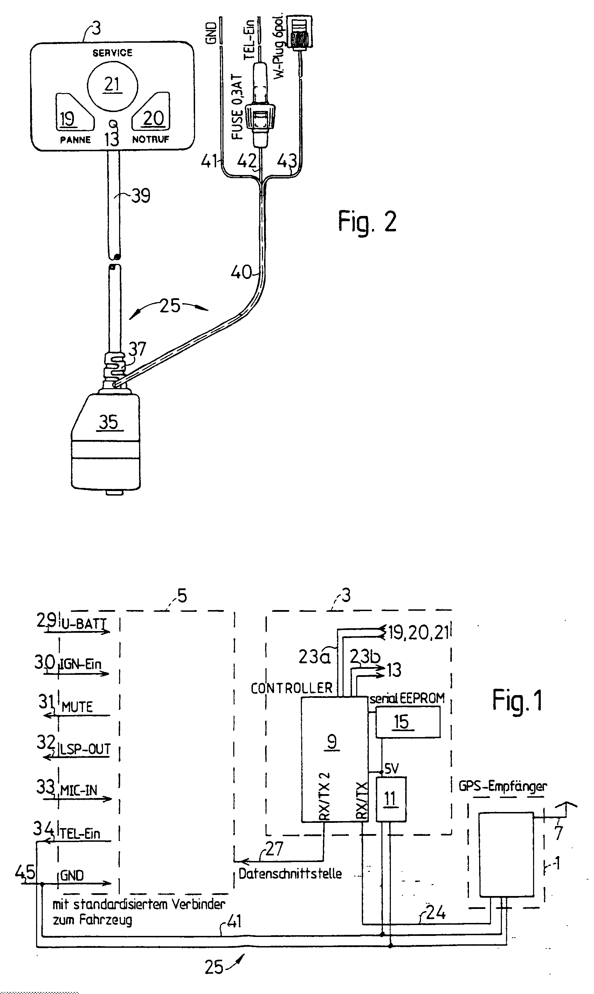

**Figur 1** zeigt den erfindungsgemäßen Bausatz, der für eine Montage in einem Fahrzeug zur funktechnischen Übermittlung von Informationen vorgesehen ist. Der Bausatz hat ein erste und eine zweite Baueinheit **1** bzw. **3**. Beide Baueinheiten **1** und **3** sind hier beispielsweise mit einer Freisprecheinrichtung **5** innerhalb eines nicht dargestellten Fahrzeugs elektrisch verbunden.

Die erste Baueinheit **1** ist eingehäusig aufgebaut. Das Gehäuse beinhaltet einen Antennenfuß, der die Antenne **7** für die nachrichtentechnischen Übermittlungen trägt, sowie eine GPS (**G**lobal-**P**ositioning **S**ystem)-Empfangs- und -datenverarbeitungseinheit als eine den geographischen Ort erkennende Auswerteeinheit zur Positionsbestimmung. Mit dieser GPS-Empfangs- und -datenverarbeitungseinheit ist eine exakte Lokalisierung des die Antenne tragenden Fahrzeugs gegeben. Damit die erste Baueinheit **1** problemlos auf dem Fahrzeugdach befestigbar ist, hat sie einen nicht dargestellten Magnetfuß. Aufgrund dieses Magnetfußes und der unten beschriebenen steckbaren Verbindung mit der zweiten Baueinheit **3** kann die erste Baueinheit **1** als das gegenüber dem ersten teureren problemlos austauschbar auch an anderen Fahrzeugen installiert werden.

Die zweite Baueinheit **3** hat eine die Software enthaltende Steuereinhei**t 9** sowie einen mit dieser verbundenen Spannungskonstanthalter **11** zum Konstanthalten der Versorgungsspannung der vorhandenen elektronischen Bauelemente bzw. der unten angeführten optischen Anzeige **13** und ein serielles EEPROM **15** als Informationsspeicher. Auch die zweite Baueinheit **3** ist hier in einer bevorzugten Ausführungsform eingehäusig ausgeführt. Die zweite Baueinheit **3** ist als aufklebbare Tastenmatte ausgebildet. Ein Gehäuse im landläufigen Sinn ist somit nicht mehr vorhanden. Man kann die zweite Baueinheit **3** jedoch immer noch als eingehäusig bezeichnen, da es in sich abgeschlossen und nach außen geschützt ausgebildet ist.

Auf der Mattenoberseite **17** sind hier beispielsweise drei Taste**n 19** bis **21** als Teil einer Auslöseeinheit für ein manuelles Auslösen eines Pannennotrufes, eines Hilferufes zur Information von Polizei und Ambulanz sowie eines Servicerufes für allgemeine Informationen, wie Streckeninformation, touristische Informationen etc. angeordnet. Ferner ist in die Oberseite **17** die optische Anzeige **13** mit grünen und roten LED's eingesetzt. Die elektrischen Verbindungen der Steuereinheit **9** zu den Tasten **19** bis **21** sowie zu den beiden LED's sind in **Figur** 1 schematisch durch die beiden integrierten Leitungspaar**e 23a** und **23b** angedeutet. Ein Kontaktpunkt der Steuereinheit **9**, mit RX/TX bezeichnet, ist mit einer Signalleitung **24** im unten beschriebenen Verbindungskabel **25** mit der Baueinheit **1** verbunden. Ein weiterer, mit der Bezeichnung RX/TX2 versehener Kontaktpunkt der Steuereinheit **9** ist über eine Signalleitung **27** des Verbindungskabels **25** mit der Freisprecheinrichtung **5** verbunden.

Der erfindungsgemäße Bausatz ist in **Figur 1** mit der Freisprecheinrichtun**g 5** verbunden. Für eine einwandfreie Funktion des unten beschriebenen automatischen Ablaufs ist diese Freisprecheinrichtung **5** nicht zwingend notwendig. Auf sie kann verzichtet werden, sie weist jedoch einige elektrische Anschlüsse auf, mit denen eine sehr einfache Verkabelung möglich ist. Ist die Freisprecheinrichtung nicht vorhanden, ist ein entsprechend anders konfiguriertes Verbindungskabel **25** zu verwenden.

Die in **Figur 1** gezeigte Freisprecheinrichtung **5** hat einen Anschluß **29** an eine nicht dargestellte Autobatterie sowie einen Anschluß **30,** der mit der Fahrzeugzündung verbunden ist. Hiermit ist dann auch über die nachrichtentechnische Verbindung feststellbar, ob die Fahrzeugzündung eingeschaltet ist. Ein weiterer Anschluß **31** dient zur Stummschaltung eines Autoradios, um eine bessere Verständigung bei einem Nachrichtenverkehr im Fahrzeug zu erhalten. An einem Anschluß **32** ist ein nicht dargestellter, zu einer fakultativen Freisprecheinrichtung gehörender Lautsprecher anschließbar. Der Übergang zu einem Mobiltelefon erfolgt auf der Basis dieses fakultativen Mobiltelefons. An einem Anschluß **33** ist ein nicht dargestelltes Mikrofon anschließbar. Ein Anschluß **34** ist über das Verbindungskabel **25** mit den Baueinheiten **1** und **3** verbunden und dient insbesondere zur Stromversorgung sowie zum Ein- und Ausfahren der Antenne **7**. Die Freisprecheinrichtung **5** und die beiden Baueinheiten **1** un**d 3** sind über einen Erdleiter **41** miteinander verbunden.

Das Verbindungskabel **25** hat einen Stecker **35**, mit dem es an die erste Baueinheit **1** lösbar anschließbar ist. Aus der Tülle **3**7 des Steckers **35** geht ein erster Kabelstrang **39** zur zweiten Baueinheit **5** und ist mit diesem unverlierbar fest verbunden. Der Kabelstrang **39** enthält die Signalleitungen **24** und **27** sowie die Leitungen für die Stromversorgung. Aus der Tülle **37** wird neben dem ersten Kabelstrang **39** ein zweiter Kabelstrang **40** herausgeführt. Dieser Kabelstrang **40** verzweigt sich später in drei Kabelunterstränge **41, 42** und **43**. Der Kabelunterstrang **41** dient zur Erdung und wird an einen Erdungsanschluß **45** der Freisprecheinrichtung **5** angeschlossen, sofern diese vorhanden ist, ansonsten an das Fahrzeugschassis. Der Kabelunterstrang **42** dient zur Stromversorgung und wird an den Anschluß **34** der Freisprecheinrichtung **5** angeschlossen, sofern diese vorhanden ist, ansonsten an den nicht dargestellten Zigarettenanzünder. Der Kabelunterstrang **43** enthält die Signalleitung **27** und wird zur Freisprecheinrichtung **5** geführt, kann aber bei deren Fehlen mit einem Handy verbunden werden.

Beim Betrieb des im Fahrzeug eingebauten Bausatzes empfängt die Steuereinheit **9** Ortsdaten von der Auswerteeinheit, welche diese geeignet bearbeitet und im Informationsspeicher **15** speichert, in dem diese neuen Daten vorhergehend ermittelten überschrieben werden. Wird z. B. die Notruftaste **20** gedrückt, so wird nur der Aufbau eines Rufes zu einer bestimmten, vorgegebenen Service-Rufnummer vorgenommen und entsprechend der nachfolgenden Abklärungen das Datentelegramm gesendet. Eine Identifizierung des Benutzers erfolgt im Ruf nur durch netzimmanente Eigenschaften der Übertragung der Telefonnummer sowie in dem Datentelegramm durch Übertragung der Seriennummer der zweiten Baueinheit. Nach Drücken der Notruftaste **20** prüft ferner die Steuereinheit **9**, ob eine Einbuchung im Heimnetz besteht. Besteht diese Einbuchung nicht, wird durch einen entsprechenden Abruf aus dem Informationsspeicher **15** die allgemein gültige Notrufnummer "112" gewählt und der Notruf ausgesandt. Da im Augenblick die normalen Notrufempfangsstellen eine Positionsmitteilung noch nicht empfangen können, wird die mit GPS ermittelte augenblickliche Ortsposition noch nicht ausgesendet, kann aber später auch mit ausgesendet werden. Ist der Notrufausgelöst, leuchtet die optische Anzeige **13** rot auf.

Ist jedoch eine Einbuchung in das Heimnetz bei Drücken der Notruftaste gegeben, wird die entsprechende Nummer für das Heimnetz gewählt und die mit GPS ermittelte Ortsposition durchgegeben. Ist die Verbindung aufgebaut, leuchtet die optische Anzeige **13** grün, während des Aufbaus ist ein blinkendes Grün vorhanden.

Wird ein Pannenrufdurch Drücken der Taste **19** ausgelöst und ist eine entsprechende Einbuchung im Heimnetz nicht vorhanden, so blinckt die optische Anzeige rot. Ist eine Einbuchtung vorhanden, so erfolgt die automatische Anwahl mit der im Speicher **15** vorhandenen Nummer, eine Ortsübermittlung mit Daten von GPS und eventuell weiteren im Speicher bereits abgespeicherten Daten. In dem Augenblick, in dem die Verbindung zustande gekommen ist, leuchtet die optische Anzeige **13** grün. Kommt auch hier keine Verbindung zustande, blinkt die optische Anzeige rot.

Die GPS-Einheit in der Baueinheit **1** führt im eingeschalteten Zustand eine kontinuierliche Positionsbestimmung durch. Die Daten hierzu werden im Speicher **15** abgespeichert, d.h. laufend überschrieben. Die Steuereinheit **9** baut den Ruf auf und versendet bei stehender Verbindung dann das Datentelegramm. Ein Datentelegramm der die Daten empfangenden Zentrale zur Steuerung von Abläufen und eine Empfangsbestätigung wird nicht übertragen. Es erfolgt auch keine Verschlüsselung der Daten. Es werden lediglich Daten gesandt. Aus diesen Daten wird dann in der Zentrale die entsprechende auszuführende Dienstleistung von einem Operator erkannt und die entsprechenden Handlungen in Auftrag gegeben.

Die Baueinheit **3** initiiert nur den Aufbau eines Rufes zu einer bestimmten vorher abgespeicherten Service-Nummer. Alle weiteren Abläufe in der Behandlung des Rufes werden mit der vorhandenen Freisprechvorrichtung vorgenommen. Auf eine Benutzerauthentikation wird verzichtet; es erfolgt keine Verschlüsselung der Daten; auch versendet eine funktechnische Bearbeitungsstelle (Zentrale) kein Freischaltungsprofil für das Endgerät im Fahrzeug. Eine Überprüfung der Integrität der gesendeten Daten wird ebenfalls nicht vorgenommen. Die Identifizierung des Benutzers erfolgt im Ruf durch die netzimmanente Eigenschaft der Übertragung der Telefonnummer. In dem Datentelegramm erfolgt sie durch eine Übertragung einer im Speicher **15** abgespeicherten Seriennummer. Durch all diese Maßnahmen werden bisherige Softwareabläufe verringert, wodurch der oben erwähnte stark vereinfachte Hardwareaufbau erst erreichbar ist. Ein Gespräch mit einem Operator in der Bearbeitungsstelle (Zentrale) und der Abbruch des Rufes erfolgen mit der oben genannten Freisprecheinrichtung, die das Mobiltelefon aufnimmt.

Der Notruf hat oberste Priorität. Ein Notruf bricht jeden anderen Dienst und jedes Telefongespräch ab. Um zu verhindern, daß ein Notrufversehentlich ausgelöst wird, muß die Taste **20** mindestens zwei Sekunden gedrückt werden. Andere Sicherungsmaßnahmen sind ebenfalls möglich.

Bei einem Auslösen durch einen manuellen Tastendruck fragt die Steuereinheit **9** vom Mobiltelefon zuerst den aktuellen Zustand ab (z.B. ob im Heimnetz eingebucht ist). Erst anschließend wird das Datentelegramm mit der Ortsposition des Fahrzeugs an die Zentrale unter Aufbau des Rufes gesandt. Ist das "Heimnetz" nicht verfügbar aber die Funkversorgung durch ein anderes Netz gegeben, wird kein Datentelegramm gesendet und ein Rufzur Notrufnummer 112 aufgebaut. Das Gespräch mit einem Operator in einer Bearbeitungsstelle und der Abbruch des Rufes erfolgen über die oben genannte Freisprecheinrichtung, die das Mobilfunktelefon aufnimmt.

Anstelle der drei Tasten **19** bis **21** auf der zweiten Baueinheit **3** kann auch nur eine einzige, bevorzugt nur die Notruftaste, vorgesehen werden. Man kann jedoch auch mehr als nur drei Tasten vorsehen.

Anstelle eines Magnetfußes für die Befestigung der ersten Baueinheit **1** auf dem Fahrzeugdach, können selbstverständlich auch andere Halteelemente benützt werden. Sie kann auch angeschraubt werden. Ein einfaches Auswechseln ist dann allerdings nicht mehr gegeben. Es kann auch ein sog. Saugfuß verwendet werden.

Wie oben beschrieben, wird die zweite Baueinheit **3**, welche hauptsächlich von Fahrzeuginsassen, in der Regel dem Fahrzeuglenker bedient wird, in einer gut bedienbaren Position angebracht. Es hat sich nun gezeigt, daß diese Position nicht für jeden Fahrzeuglenker dieselbe ist. Aus diesem Grund ist die zweite Baueinheit **3** auch als aufklebbare Tastenmatte ausgebildet worden. Um einem Bediener nun eine vollkommen freie Positionswahl der zweiten Bedieneinheit im Fahrzeug zu geben, ist diese nicht nur aufklebbar, insbesondere abnehmbar und wieder aufklebbar hergestellt worden, sondern zusätzlich noch derart ausgebildet worden, daß elektrische Verbindungskabel entfallen.

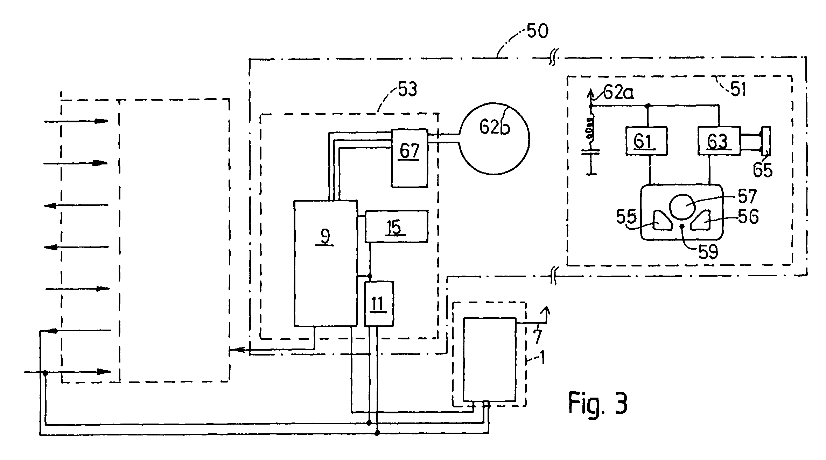

In **Figur 3** ist nun eine derartige Anordnung dargestellt. Im Gegensatz zu der in **Figur 1** dargestellten Baueinheit **3** ist eine zweite Baueinheit **50** mit denselben Eigenschaften wie die Baueinheit **3** zweiteilig mit den Teileinheiten **51** und **53** ausgebildet. Die Teileinheit **51** ist nun ebenfalls als Tastenmatte mit drei Tasten **55** bis **57** für Pannenhilfe, Notruf und Service ausgebildet. Ferner hat diese Tastenmatte eine zur optischen Anzeige **13** analoge Anzeige **59**.

Die Teileinhei**t 51** ist energetisch und signalmäßig kontaktlos mit der Teileinheit **53** verbunden. Die Verbindung zwischen beiden Teileinheiten **51** und **53** erfolgt über die beiden miteinander gekoppelten Antennen **61a** und **61b**. Zusätzlich zur Antenn**e 61a** hat die Teileinheit **51** einen Sende-/Empfangsbaustein **61** und einen Steuerbaustein **63**, der die schaltungstechnische und logische Verknüpfung für die Tastenfunktionen und die Anzeige vornimmt. Ferner erzeugt der Steuerbaustein **63** aus einer mit dem Empfangsbaustein empfangenen Hochfrequenzstrahlung einen Gleichstrom, der in einen aufladbaren Energiespeiche**r 65** gespeichert wird. Als Energiespeicher wird eine Miniknopfzelle verwendet, da die elektrischen Bauelemente des Bauteils **50** nur einen geringen Strombedarf aufweisen. Auch kann eine Datenaussendung über die Antenne **62a** der Baueinheit **50** nahezu ohne Energieverbrauch durch Modulation und insbesondere durch Dämpfung des elektromagnetischen Feldes erfolgen.

Die Teileinheit **53** weist die restlichen Bauelemente analog zur Baueinhei**t 1** auf. Ferner hat die Teileinheit **53** eine Antenne **62b** und einen Sende-/Empfangsbaustei**n 67**. Spannungskonstanthalter, Steuereinheit und Informationsspeicher sind analog zu den Bausteinen der einteiligen Baueinheit **3** ausgebildet und somit auch mit den gleichen Bezugszeichen **11, 9** und **15** gekennzeichnet.

Wird jetzt z. B. die Notruftaste **56** gedrückt, so sendet der Sende-/Empfangsbaustein **61** der Teileinheit **51** sofort das entsprechende Datentelegramm über die Antenne **62a** an den Sende-/Empfangsbaustein **67**. Im ständigen Datenaustausch wird die Dauer des Drucks auf die Taste **56** durch die Steuereinheit **9** gemessen. Ist der zum Auslösen des Notrufs notwendige Zeitraum von 2 Sekunden überschritten, wird das Datentelegramm an die Bearbeitungsstelle unter Aufbau des Rufes über die Antenne **7** gesandt.

Anstelle einen Notruf über den Tastendruck auszusenden, kann auch in die Teileinheit **51** ein Schocksensor anstelle der Notruftaste **56** oder zusätzlich zu dieser eingebaut werden. Bei einem Fahrzeugunfall wird nun automatisch ein Notruf über diesen Schocksensor initiiert.

Da die Teileinheit nicht mehr mit Kabeln verbunden werden muß, kann sie im Fahrzeug an nahezu beliebigen Stellen eingebaut werden, wobei man dann hier auf Tasten und/oder Anzeige verzichten kann.

Anstelle einer Hochfrequenzstrahlung kann selbstverständlich auch eine infrarote Strahlung mit entsprechenden Sendern und Empfängern verwendet werden.

Wird von der Teileinheit **51** bzw. von der einteiligen Baueinheit **3** nur eine automatische Notruffunktion ausgeführt, so kann hierdurch der Hardwareaufwand weiter reduziert werden: Die Steuerung des Mobiltelefons als Reaktion auf diese Auslösung wird als Softwaremodul in den Controller der Baueinheit **1** eingefügt, der dann neben der Berechnung der geographischen Lage auch auf dieses Auslösesignal reagieren muß. Die Rechenleistung eines GPS-Prozessors reicht völlig aus, um diesen Ablauf sicher abzuarbeiten. Die gesamte Anordnung reduziert sich dann auf die Verwendung eines zum Stecker **35** geeignet umgebauten Steckers mit dem Kabel **40** und den Anschlüssen **41**, **42** und **43**. An diesem modifizierten Stecker ist dann nur noch die Baueinheit **1** angeschlossen.

Anstelle nur die Teileinheit **51** kontaktlos anzuordnen, könnte auch die ganze Baueinheit **3** kontaktlos mit der Baueinheit **1** verbunden werden. Es ist jedoch hierbei zu beachten, daß bei einer Verwendung von Hochfrequenzstrahlung für den Energietransport Grenzwerte in der Fahrerkabine nicht überschritten werden dürfen. In diesem Fall würde lediglich von der Baueinheit eine Antenne in die Fahrerkabine, z. B. durch einen Schlitz zwischen seitlichem Fenster und dessen Rahmen gezogen. Die Baueinheit **1** würde man in diesem Fall ebenfalls vom Bordnetz unabhängig z.B. mit einer eigenen Batterieversorgung ausgestalten.

## Patentansprüche

1. Bausatz für eine Montage in einem Fahrzeug zur funktechnischen Übermittlung wenigstens eines bereits abgespeicherten Informationssatzes mit einer ersten eingehäusigen, eine erste Antenne **(7)** zusammen mit einer den geographischen Ort erkennenden Auswerteeinheit aufweisenden Baueinheit **(1)**, welche zusätzlich eine Ortsspeichereinheit für diesen Ortswert hat, und eine zweite wenigstens eine Auslöseeinheit zum Auslösen des Informationssatzes aufweisende Baueinheit **(3; 50)**.

2. Bausatz nach Anspruch 1, **dadurch gekennzeichnet**, daß erste und zweite Baueinheit **(1, 3, 50)** örtlich voneinander getrennt, signalmäßig aber miteinander verbunden sind, in die zweite Baueinheit **(3 50)** eine Steuereinheit (Controller) **(9)** integriert und bevorzugt die zweite Baueinheit **(3 50)** als aufklebbare Matte, insbesondere als Tastenmatte mit wenigstens einer manuell bedienbaren Taste **(19, 20, 21)** als Auslöseeinheit ausgebildet ist wobei die Matte zur Montage an einer der Fahrzeuginnenseiten unverlierbar anbringbar, insbesondere anklebbar ist.

3. Bausatz nach Anspruch 1 oder 2, **gekennzeichnet durch** eine Mobilfunkvorrichtung mit einem Handfunktelefon (Handy) und bevorzugt einer im Fahrzeug montierbaren Freisprecheinrichtung **(5)**, welche signalmäßig und stromversorgungsmäßig mit einer einzigen Verbindungskabelanordnung **(25)** mit der ersten und zweiten Baueinhei**t (1, 3)** lösbar verbindbar sind.

4. Bausatz nach einem der Ansprüche 1 bis 3, **dadurch gekennzeichnet**, daß die erste Baueinheit **(1)** einen Magnetfuß hat, mit dem sie auf dem Fahrzeugdach befestigbar ist.

5. Bausatz nach einem der Ansprüche 1 bis 4, **dadurch gekennzeichnet**, daß die zweite Baueinheit **(3; 50)** wenigstens ein optisches Anzeigeelement **(13; 59)** hat, mit dem ein funktechnischer Verbindungsstand anzeigbar ist, und bevorzugt einen Schocksensor als Auslöseeinheit aufweist, bei dessen Ansprechen selbsttätig ein Notruf zusammen mit der geographischen Ortserkennung des Fahrzeugs aussendbar ist.

6. Bausatz nach Anspruch 1, **gekennzeichnet durch** eine einstückige Verbindungskabelanordnung **(25)** mit einem ersten Stecker **(35)**, der mit der ersten Baueinheit **(1)** oder deren elektrischen Leitungsverbindung steckbar verbindbar ist und aus dessen Tülle **(37)** ein erstes Kabe**l (39)**, welches fest mit der zweiten Baueinhei**t (3)** verbunden ist, und ein zweites Kabel **(40**), welches bevorzugt mit einer Freisprechanlag**e (5)** steckbar verbindbar ist, heraustreten.

7. Bausatz nach einem der Ansprüche 1 bis 6, **dadurch gekennzeichnet**, daß die zweite Baueinheit oder wenigstens eine die Auslöseeinheit aufweisende Teileinheit **(51)** der zweiten Baueinhei**t (50)** kontaktlos, ohne galvanische Verbindung energie- und signalmäßig unter bevorzugter Verwendung einer elektromagnetischen Strahlung angeschlossen ist und die zweite Baueinheit bzw. deren Teileinheit **(51)** neben der Auslöseeinheit einen aufladbaren Energiespeicher **(65)** und vorzugsweise wenigstens ein optisches Anzeigeelement **(59)** hat.

8. Anordnung einer ersten Baueinheit **(1)** und ein er zweiter Baueinheit **(3; 50)** eines Bausatzes nach einem der Ansprüche 1 bis 7 bei einem Fahrzeug, **dadurch gekennzeichnet**, daß die erste Baueinheit **(1)** eingehäusig mit einer Antenn**e (7)** und einer den geographischen Ort erkennenden Auswerteeinheit ausgebildet ist, die zweite Baueinheit **(3; 50)** mit der ersten signalmäßig verbunden ist und eine Auslöseeinheit zum Auslösen eines Informationssatzes hat, der zusammen mit dem ermittelten geographischen Ort überdie erste Antenne **(7)** zu einer entfernten Bearbeitungsstelle funktechnisch übermittelbar ist.

9. Anordnung nach Anspruch 8, **gekennzeichnet durch** eine Mobilfunkvorrichtung mit einem Handfunktelefon (Handy) und bevorzugt einer im Fahrzeug montierbaren Freisprecheinrichtung **(5)**, welche signalmäßig und stromversorgungsmäßig mit einer einzigen Verbindungskabelanordnung **(25)** mit der ersten und zweiten Baueinheit **(1, 3)** lösbar verbunden sind.

10. Verwendung eines in einem Fahrzeug installierten Bausatzes nach einem der Ansprüche 1 bis 7, **dadurch gekennzeichnet**, daß von der den geographischen Ort erkennenden Auswerteeinheit der ersten Baueinheit **(1)** der Ort laufend bei einem Ortswechsel des Fahrzeugs in vorgegebenen Zeitabständen ermittelt und als neue Ortsinformation in der Ortsspeichereinheit abgespeichert wird, nach Auslösen einer Auslöseeinheit in einer zweiten Baueinheit **(3; 50)** ein Auslösekennzeichen generiert und an die erste Baueinheit **(1)** übermittelt wird, wodurch dann die erste Baueinheit die Ortsinformation funktechnisch über die erste Antenne der ersten Baueinheit zu einer entfernten Bearbeitungsstelle zusammen mit dem Auslösekennzeichen übermittelt.
